# EUROPÄISCHE PATENTANMELDUNG

(11) **EP 3 702 997 A1**
(43) Veröffentlichungstag der Anmeldung: **02.09.2020**
(21) Anmeldenummer: 19160287.9
(22) Anmeldetag: 01.03.2019
(51) Int. Cl.: G06Q 50/04, G06Q 10/06

(54) **MONTAGE EINES PRODUKTES**

(71) Anmelder: Siemens Aktiengesellschaft, 80333 München (DE)
(72) Erfinder: Boschert, Stefan, 85579 Neubiberg (DE); Gonnermann, Clemens, 80799 München (DE); Leiber, Daria, 85784 Garching (DE)

(57) **Zusammenfassung**

Die Erfindung betrifft ein Bereitstellen einer Anweisung (1), welche eine Montage eines Produkts (3) betrifft. Dazu werden Produktdaten (4) empfangen, welche für eine oder mehrere Randbedingungen der Montage des Produktes (3) kennzeichnend sind. Darüber hinaus werden Montagedaten (5) empfangen, welche für eine Montageanordnung (2) zur Montage des Produktes (3) kennzeichnend sind. Abhängig von den Produktdaten (4) und den Montagedaten (5) wird die Anweisung (1) ermittelt, welche dann ausgegeben wird.

## Beschreibung

Die vorliegende Erfindung betrifft die Bereitstellung einer Anweisung bezüglich der Montage oder Erstellung eines Produktes.

Der letzte wertschöpfende Schritt bei der Produktion ist die Montage des Produkts, wobei dieser Schritt einen erheblichen Teil der Kosten bei der Produktion verursacht. Die Höhe dieser Kosten wird jedoch zum größten Teil durch die Entwicklung des Produktes verursacht und wird erst während der Montage konkret ersichtlich. Dabei stellt die zunehmende Anzahl von kundenindividuellen Produkten die Unternehmen vor zusätzliche Herausforderungen bezüglich der Planung der Montage. Die Montageabläufe lassen sich schwer standardisieren, wenn die Produkte in geringen Losgrößen produziert werden und sich die einzelnen Vorgänge auf der Montagelinie aufgrund der sich häufig ändernden zu produzierenden Produkte ständig ändern. Darüber hinaus erschweren individuelle Montageprozesse die Planung der Montage zusätzlich und sorgen dafür, dass die Vorbereitung der Produktion sehr zeit- und kostenaufwändig ist. Erschwerend kommt hinzu, dass die zu produzierenden Produkte und die bestehenden Montagelinien oftmals nicht aufeinander abgestimmt sind, so dass die Zuordnung von Montageaufgaben (Anforderungen des Produktes hinsichtlich der Montage) zu den Betriebsmitteln (d.h. Fähigkeiten der Montagelinie oder Montageanordnung) nicht ohne Anpassungen erfolgen kann.

Daher stellt sich die vorliegende Erfindung die Aufgabe, die Montage eines Produktes möglichst ressourcenschonend und effektiv zu realisieren.

Erfindungsgemäß wird diese Aufgabe durch ein Verfahren zum Bereitstellen einer Anweisung, welche eine Montage eines Produktes betrifft, nach Anspruch 1, durch eine Vorrichtung nach Anspruch 8, durch ein Computerprogrammprodukt nach Anspruch 10 und durch einen elektronisch lesbaren Datenträger nach Anspruch 11 gelöst. Die abhängigen Ansprüche definieren bevorzugte und vorteilhafte Ausführungsformen der vorliegenden Erfindung.

Im Rahmen der vorliegenden Erfindung wird ein Verfahren zum Bereitstellen einer Anweisung, welche eine Montage eines Produktes betrifft, bereitgestellt. Dabei umfasst das Verfahren folgende Schritte:
- Empfangen von Produktdaten, welche für eine oder für mehrere Randbedingungen bei der Montage des Produktes kennzeichnend sind. Dabei umfassen die Produktdaten oder Randbedingungen insbesondere Anforderungen des Produktes bezüglich seiner Montage.
- Empfangen von Montagedaten, welche für eine Montageanordnung zur Montage des Produkts kennzeichnend sind. Die Montagedaten definieren insbesondere Eigenschaften oder Fähigkeiten der Montageanordnung hinsichtlich der Montage des Produkts.
- Automatisches Ermitteln der Anweisung in Abhängigkeit von den Produktdaten und den Montagedaten. In diesem Schritt wird insbesondere überprüft, ob die Produktdaten und die Montagedaten ohne Änderung in Einklang gebracht werden können. Falls die Produktdaten und die Montagedaten nicht in Einklang gebracht werden können, werden Änderungen insbesondere der Produktdaten und möglicherweise auch der Montagedaten bestimmt, wobei diese Änderungen die Basis der zu ermittelnden Anweisung darstellen.
- Ausgabe der Anweisung. Durch die Ausgabe der Anweisung können die vorab bestimmten Änderungen durchgeführt werden bzw. kann die Durchführung der Änderungen initiiert werden.

Indem die durchzuführenden Änderungen insbesondere der Produktdaten möglichst ressourcenschonend (z. B. mit minimalen Änderungen am Produkt) durchgeführt werden, wird erfindungsgemäß die oben gestellte Aufgabe gelöst.

Die Montagedaten umfassen insbesondere Informationen, welche eine Fähigkeit zur Montage des Produkts mittels Betriebsmitteln einer oder mehrerer Montagestationen der Montageanordnung definieren.

Unter Montagedaten werden insbesondere Informationen verstanden, welche Spezifikationen betreffend der Montageanordnung, die eine oder mehrere Montagestationen umfasst, umfassen. Diese Spezifikationen beschreiben die Eigenschaften der Montagestationen oder Betriebsmittel hinsichtlich der Montage eines Produkts. Dabei können die Betriebsmittel auch Beförderungsmittel zur Beförderung des Produkts zwischen Montagestationen umfassen. Diese Informationen oder Spezifikationen beschreiben beispielsweise die Fähigkeit einer Montagestation der Montageanordnung, das zu erstellende Produkt oder ein Zwischenprodukt dieses Produkts zu halten, zu drehen oder anderweitig zu bewegen.

Anders ausgedrückt beschreiben die Montagedaten die Fähigkeiten der Betriebsmittel der Montageanordnung. Diese Fähigkeiten umfassen beispielsweise u.a. Bewegungseigenschaften (z.B. Geschwindigkeit) der Betriebsmittel, Greifeigenschaften (z.B. Greifspanne, Traglast) der Betriebsmittel und/oder Schraubeigenschaften (z. B. Drehmomente) der Betriebsmittel.

Die Produktdaten können Informationen oder Spezifikationen bezüglich einer räumlichen Struktur (z. B. Abmessungen oder das Gewicht des Produkts) im Endstadium oder in einem Zwischenstadium des zu erstellenden Produkts beschreiben. Die Informationen oder Spezifikationen können sich auch auf eine räumliche Struktur einzelner Bauelemente bzw. Bauteile des zu erstellenden Produktes oder auf eine Verbindungsfähigkeit der verschiedenen Bauteile des Produkts beziehen. Darüber hinaus können die Informationen oder Spezifikationen angeben, in welcher Reihenfolge die verschiedenen Bauteile des zu erstellenden Produkts verbunden und/oder zusammengebaut werden können, um das Produkt zu montieren. Des Weiteren können die Produktdaten Zeitanforderungen z. B. beim Auftragen einer Lackierung oder eines Klebstoffs auf das Produkt umfassen.

Gemäß einer bevorzugten erfindungsgemäßen Ausführungsform betrifft die Anweisung Informationen bezüglich einer Designänderung des Produkts, um dadurch die durch die Produktdaten gekennzeichneten ein oder mehreren Randbedingungen an die durch die Montagedaten gekennzeichneten Fähigkeit zur Montage des Produktes anzupassen.

Gemäß dieser Ausführungsform können nur die Produktdaten derart geändert werden, dass anschließend (nach der Änderung) das Produkt mit der Montageanordnung hergestellt werden kann, ohne dass auch die Montagedaten (d.h. die Montageanordnung oder die Betriebsmittel) geändert werden müssen.

Erfindungsgemäß kann das Ermitteln der Anweisung ein Abgleichen zwischen den Produktdaten und den Montagedaten umfassen, um dadurch einen durch die ein oder mehreren Randbedingungen spezifizierten und von der Montageanordnung nicht durchführbaren Montagevorgang zu bestimmen. Mit anderen Worten wird ein Anforderungs-Fähigkeiten-Abgleich zwischen den (Montageprozess-) Anforderungen des Produkts (Produktdaten) und den Fähigkeiten der Betriebsmittel (Montagedaten) durchgeführt, um nicht durchführbare Montagevorgänge zu identifizieren.

Die durch diesen Anforderungs-Fähigkeiten-Abgleich gewonnenen Informationen werden verwendet, um insbesondere das Produkt und somit die zur Montage des Produkts notwendigen Montagevorgänge an die Montageanordnung oder Montagelinie anzupassen.

Insbesondere die Anforderungen des Produktes hinsichtlich seiner Montage definieren bestimmte Montagevorgänge, welche zur Montage des Produkts notwendig sind. Durch das vorab beschriebene Abgleichen werden nun diejenigen dieser Montagevorgänge bestimmt, welche von der Montageanordnung (d.h. von ihren Betriebsmitteln) nicht bezüglich der Montage dieses Produkts durchgeführt werden können. Um das Produkt dennoch montieren zu können, können die Produktdaten derart geändert werden, dass entweder der vor der Änderung nicht durchführbare Montagevorgang nach der Änderung durchgeführt werden kann oder dass der vor der Änderung nicht durchführbare Montagevorgang zur Montage des Produkts nicht mehr erforderlich ist.

Das Abgleichen zwischen den Produktdaten und den Montagedaten bzw. der Anforderungs-Fähigkeiten-Abgleich kann quantitative und qualitative Analysen sowie Simulationen zur Überprüfung auf Kollisionsfreiheit umfassen. Bei diesen quantitativen und qualitativen Analysen werden insbesondere Parameter der zur Montage des Produkts erforderlichen Montagevorgänge mit Parametern der Betriebsmittel der Montageanordnung verglichen.

Gemäß einer weiteren erfindungsgemäßen Ausführungsform umfasst das Ermitteln der Anweisung eine Mehrkörpersimulation, mit welcher Bewegungen von Betriebsmitteln der Montageanordnung zusammen mit Bauteilen des Produktes bei der Montage des Produktes abhängig von der einen oder den mehreren Randbedingungen simuliert werden. Durch diese Mehrkörpersimulation wird eine Kollisionsprüfung realisiert, um dadurch einen von der Montageanordnung nicht durchführbaren Montagevorgang zu bestimmen.

Anhand der Mehrkörpersimulation werden die Bewegungen der Betriebsmittel und des Produktes bzw. der Bauteile des Produktes während der Montage des Produktes simuliert. Beispielsweise wird das Hinkommen eines Betriebsmittels (z.B. eines Greifers oder Schraubers) oder das Zurückholen eines Betriebsmittels oder die Veränderung eines Betriebsmittels beim Greifen oder Loslassen des Produkts simuliert. Falls die Mehrkörpersimulation eine Kollision erkennt, kann durch die Mehrkörpersimulation auch die Position der Kollision, die Orientierung der an der Kollision beteiligten Objekte sowie das Volumen der Überschneidung aufgrund der Kollision ermittelt werden, um dadurch Informationen hinsichtlich des nicht durchführbaren Montagevorgangs zu erzeugen, welche bei der Bestimmung eines Fehlerbilds oder bei der Bestimmung von Designänderungen hilfreich sind.

Das Ermitteln der Anweisung kann auch ein Kategorisieren des nicht durchführbaren Montagevorgangs umfassen, um ein Fehlerbild zu bestimmen, welches einen Grund umfasst, weshalb der Montagevorgang nicht durchführbar ist.

Beispielsweise mithilfe des Anforderungs-Fähigkeiten-Abgleichs eines Montageplans werden individuelle Probleme einzelner Montagevorgänge identifiziert, welche für die Produktion bzw. Montage des Produkts erforderlich sind. Mithilfe der Kategorisierung der Informationen, die aus diesem Anforderungs-Fähigkeiten-Abgleich gewonnen werden, kann das Fehlerbild spezifiziert werden. Dieses Fehlerbild beinhaltet im Wesentlichen den Grund, weshalb ein bestimmter Montagevorgang nicht durchführbar ist, und weitere relevante Informationen zum Fehlerfall bzw. nicht durchführbaren Montagevorgang.

Dabei können grob folgende Kategorien berücksichtigt werden:
- Der Montagevorgang kann aufgrund von Abmessungen eines Bauteils oder eines Zwischenprodukts des zu montierenden Produkts oder des Produkts selbst nicht durchgeführt werden, was als Bauteilfehler bezeichnet wird. Ein Bauteilfehler liegt insbesondere vor, wenn es aufgrund der Abmessungen des Bauteils oder des Zwischenprodukts nicht möglich ist, das Bauteil bei einem Montagevorgang zu transportieren oder bereitzustellen.
- Der Montagevorgang kann aufgrund einer Kollision eines Betriebsmittels mit einem Bauteil des Produkts nicht durchgeführt werden, was als Kollisionsfehler bezeichnet wird.
- Der Montagevorgang kann aufgrund einer nicht vorhandenen Fähigkeit eines Betriebsmittels nicht durchgeführt werden, was als Betriebsmittelfehler bezeichnet wird.

Die Kategorie Bauteilfehler kann weiter in Unterkategorien aufgeteilt werden, wie z.B. Bauteil/Zwischenprodukt/Produkt-Breite/Tiefe/Länge/Höhe ist zu klein/groß.

Die Kategorie Kollisionsfehler kann weiter in Unterkategorien aufgeteilt werden, wie z.B. Betriebsmittel kollidiert mit dem zu handhabenden Bauteil oder mit einem nicht zu handhabenden Bauteil.

Die Kategorie Betriebsmittelfehler kann weiter in Unterkategorien aufgeteilt werden, wie z.B. Drehmoment oder Toleranz ist zu klein/groß oder Schraubkategorie ist zu niedrig/hoch oder die Greifspanne eines Betriebsmittels stimmt nicht mit dem Abstand der zugehörigen Greifpunkte am Produkt überein.

Es ist auch möglich, dass ein nicht durchführbarer Montagevorgang verschiedenen Kategorien zugeordnet werden kann. Wenn beispielsweise eine Kollisionsanalyse der Mehrkörpersimulation zu dem Ergebnis kommt, dass die Toleranz einer Schraube des Produkts nicht mit der Toleranz des eingesetzten Betriebsmittels zusammenpasst, kann dies als Bauteilfehler oder als Betriebsmittelfehler kategorisiert werden.

Die Kategorisierung eines nicht durchführbaren Montagevorgangs kann über verschiedene Methoden, wie beispielsweise Ontologien, durchgeführt werden.

Indem die Kategorisierung über Ontologien (z.B. eine Ontologiestruktur mit Instanzen) durchgeführt wird, können zusätzlich bestehende und erzeugte Wissensbestände verknüpft und zugeordnet werden, wobei diese Wissensbestände durch Analysen und Simulationen einzelner Montagevorgänge des Produkts mit der vorgegebenen Montageanordnung erzeugt und kategorisiert sind. Die Kategorisierung der nicht durchführbaren Montagevorgänge und damit der Fehlerbilder ermöglicht die Ermittlung der Ursache bzw. des Grundes, warum der jeweilige Montagevorgang nicht durchgeführt werden konnte. Anhand des Grundes kann dann eine Änderung insbesondere der Produktdaten ermittelt werden, wobei mit dieser Änderung der vorher nicht durchführbare Montagevorgang nunmehr durchführbar ist oder nicht mehr benötigt wird.

Durch das Abgleichen zwischen den Produktdaten und den Montagedaten bzw. durch den Anforderungs-Fähigkeiten-Abgleich z.B. eines Montageplans werden individuelle Probleme einzelner Montagevorgänge identifiziert. Mit Hilfe der Kategorisierung der nicht durchführbaren Montagevorgänge oder mit Hilfe der Informationen, die aus diesem Anforderungs-Fähigkeiten-Abgleich gewonnen werden, kann das Fehlerbild spezifiziert werden. Dieses Fehlerbild beinhaltet den Grund, weshalb ein Montagevorgang nicht durchführbar ist, und weitere relevante Informationen zum Fehlerfall (d.h. zum nicht durchführbaren Montagevorgang).

Zur Ermittlung der Anweisung kann ein regelbasiertes Bestimmen einer Designänderung des Produkts ausgehend von dem kategorisierten Fehlerbild durchgeführt werden, um durch die Designänderung die Produktdaten an die Montagedaten anzupassen. Mit anderen Wort wird die Designänderung abhängig von der Kategorie (und/oder Unterkategorie (siehe unten)) durchgeführt, zu welcher das Fehlerbild oder der nicht durchführbare Montagevorgang gehört.

Dabei kann die Designänderung des Produkts eine Modifikation eines Bauteils des Produkts oder eine Änderungen von Eigenschaften eines Bauteils des Produkts umfassen. Die Modifikation (als z.B. vorgegebene Möglichkeit der Anpassung der Produktdaten an die Montagedaten) kann eine Materialänderung, eine Oberflächenänderung, eine Volumenänderung jeweils des Produkts und/oder einen Bauteiltausch umfassen. Dabei wird unter einem Bauteiltausch verstanden, dass das Produkt anstelle eines bestimmten Bauteils mit einem anderen Bauteil montiert wird, als es vorher geplant war. Das bestimmte Bauteil wird durch das andere Bauteil ausgetauscht. Die Änderung von Eigenschaften kann die Änderung eines Typs eines Bauteils (z.B. anderer Schraubentyp) und/oder die Änderung einer Eigenschaft des Bauteils (z.B. anderer Gewindedurchmesser) umfassen.

Mit anderen Worten lassen sich regelbasiert die kategorisierten Fehlerbilder einzelnen Arten von Designänderungen, wie beispielsweise Material-, Oberflächen-, Volumenänderungen, zuordnen. Der aufgrund der Vielzahl an veränderbaren Parametern zunächst sehr große, multidimensionale Lösungsraum an potentiellen Designänderungen wird insbesondere durch die Kategorisierung (des Fehlerbilds) somit strukturiert und eingeschränkt. Basierend auf diesem strukturierten und eingeschränkten Lösungsraum lassen sich automatisiert Handlungsempfehlungen für Designänderungen generieren.

Die regelbasierte Bestimmung der Designänderung kann zusätzlich weitere Informationen aus dem Abgleichen zwischen den Produktdaten und den Montagedaten (d.h. dem Anforderungs-Fähigkeiten-Abgleich) (z.B. anhand von Analysen und Simulationen der Montageaufgaben ermittelte Information) und aus dem originalen CAD-Modell verwenden.

Ein positiver Aspekt bei der Verwendung eines regelbasierten Expertensystems, mit welchem regelbasiert die Designänderung bestimmt wird, liegt in der Nachverfolgbarkeit. Bereits existentes und validiertes Wissen zur montagegerechten Produktgestaltung wird hierbei zielgerichtet für spezifische Problemstellungen verwendet, um individuelle Montageaufgaben produktseitig anzupassen.

Das regelbasierte Bestimmen der Designänderung kann genetische Algorithmen, Loss-Funktionen (z.B. mit dem Ziel, möglichst geringe Materialveränderungen am Produkt vorzunehmen) oder selbstlernende Algorithmen umfassen.

Anders ausgedrückt kann der Lösungsraum der potentiellen Designänderungen zusätzlich über unterschiedliche Methoden der Optimierung, wie z.B. den genetischen Algorithmen oder Loss-Funktionen innerhalb eines neuronalen Netzes eingegrenzt werden, um dadurch automatisiert die Designänderung ausgehend von dem Fehlerbild zu ermitteln. Mithilfe der selbstlernenden Algorithmen kann somit ein neuronales Netz prozess- und/oder produktionssystemspezifische Designänderungen innerhalb dieses Lösungsraums identifizieren.

Das regelbasierte Bestimmen der Designänderung ausgehend von dem Fehlerbild bedeutet quasi, dass Regeln für das automatisierte Ableiten von Designänderungen abhängig von dem Fehlerbild ausgeführt werden. Diese Regeln können z.B. mit einer Wissensdatenbank, welche zahlreiche mögliche Designänderungen des Produkts für bestimmte Kategorien oder Fehlerbilder umfasst, arbeiten. Damit wird ein multikriterielles Problem mit Hilfe strukturierter Daten (dem kategorisierten Fehlerbild) beispielsweise mittels eines neuronalen Netzes gelöst.

Beispielsweise ein Kollisionsfehler liegt erst dann vor, wenn es nicht möglich ist, die Kollision des Betriebsmittels mit dem Bauteil des Produkts durch andere Bewegungspfade und/oder Orientierungen des Betriebsmittels relativ zum Bauteil bei einem durchzuführenden Montagevorgang zu verhindern. Die dann vorzunehmende Designänderung zur Beseitigung dieses Kollisionsfehlers kann beispielsweise die Außenausmaße des Bauteils derart ändern (in der Regel verkleinern), dass durch diese Designänderung dann keine Kollision mehr zwischen dem Bauteil und dem zur Durchführung des Montagevorgangs erforderlichen Betriebsmittels mehr bei dem Montagevorgang auftritt.

Erfindungsgemäß ist es möglich, dass die von der Anweisung initiierten Änderungen (insbesondere an den Produktdaten) erst dann durchgeführt werden, wenn diese Änderungen durch einen Benutzer autorisiert oder freigegeben werden. Dies kann beispielsweise dadurch realisiert werden, dass die Anweisung nur ausgegeben wird, wenn diese Ausgabe durch den Benutzer autorisiert oder freigegeben wird.

Mit anderen Worten besteht die Möglichkeit, die Handlungsempfehlungen zur Produktdesignänderung durch die Bestätigung eines Benutzers (z.B. des Montageplaners) automatisch umzusetzen, indem dieser Benutzer beispielsweise die Ausgabe der Anweisung autorisiert oder freigibt, was dann automatisch ausgehend von der Anweisung zu der entsprechenden Designänderung führt.

Im Rahmen der vorliegenden Erfindung wird auch eine Vorrichtung bereitgestellt, welche ausgestaltet ist, um eine Anweisung bereitzustellen, die eine Erstellung eines Produkts betrifft. Diese erfindungsgemäße Vorrichtung umfasst:
- Eine erste Empfangseinrichtung, welche ausgestaltet ist, um Produktdaten zu empfangen, die für ein oder mehrere Randbedingungen der Montage des Produkts kennzeichnend sind.
- Eine zweite Empfangseinrichtung, welche ausgestaltet ist, um Montagedaten zu empfangen, die für eine Montageanordnung zur Montage des Produkts kennzeichnend sind.
- Eine Ermittlungseinrichtung, welche ausgestaltet ist, um abhängig von den Produktdaten und den Montagedaten die Anweisung zu ermitteln.
- Eine Ausgabeeinrichtung, welche ausgestaltet ist, um die Anweisung auszugeben.

Die Vorteile der erfindungsgemäßen Vorrichtung entsprechen im Wesentlichen den Vorteilen des erfindungsgemäßen Verfahrens, so dass hier auf eine Wiederholung verzichtet wird.

Des Weiteren beschreibt die vorliegende Erfindung ein Computerprogrammprodukt, insbesondere eine Software, welche man in einen Speicher einer programmierbaren Vorrichtung bzw. einer Recheneinheit laden kann. Mit diesem Computerprogrammprodukt können alle oder verschiedene vorab beschriebene Ausführungsformen des erfindungsgemäßen Verfahrens ausgeführt werden, wenn das Computerprogrammprodukt in der Vorrichtung läuft. Dabei benötigt das Computerprogrammprodukt eventuell Programmmittel, z.B. Bibliotheken und Hilfsfunktionen, um die entsprechenden Ausführungsformen des Verfahrens zu realisieren. Mit anderen Worten soll mit dem auf das Computerprogrammprodukt gerichteten Anspruch insbesondere eine Software unter Schutz gestellt werden, mit welcher eine der oben beschriebenen Ausführungsformen des erfindungsgemäßen Verfahrens ausgeführt werden kann bzw. welche diese Ausführungsform ausführt. Dabei kann es sich bei der Software um einen Quellcode (z.B. C++), der noch compiliert und gebunden oder der nur interpretiert werden muss, oder um einen ausführbaren Softwarecode handeln, der zur Ausführung nur noch in die entsprechende Recheneinheit bzw. Vorrichtung zu laden ist.

Schließlich offenbart die vorliegende Erfindung einen elektronisch lesbaren Datenträger, z.B. eine DVD, ein Magnetband, eine Festplatte oder einen USB-Stick, auf welchem elektronisch lesbare Steuerinformationen, insbesondere Software (vgl. oben), gespeichert ist. Wenn diese Steuerinformationen (Software) von dem Datenträger gelesen und in eine Vorrichtung bzw. Recheneinheit umgesetzt werden, können alle erfindungsgemäßen Ausführungsformen des vorab beschriebenen Verfahrens durchgeführt werden.

Die vorliegende Erfindung präsentiert ein Vorgehen für die Montageplanung, um eine effizientere und ressourcenschonendere Montage eines Produkts zu ermöglichen. Der Schwerpunkt liegt hierbei auf der Arbeitsplanung bzw. Montageplanung eines neuen Produkts für eine bereits bestehende Montagelinie oder Montageanordnung. Ziel der vorliegenden Erfindung ist die Vermeidung von Umrüstungs- und Rekonfigurationsaufwänden (d.h. Anpassungen der Montageanordnung) an ein neues zu montierendes Produkt. Stattdessen soll produktionssystemspezifisch das zu montierende Produkt (an die Montageanordnung) angepasst werden, so dass keine aufwändigen Rekonfigurationen der Montageanordnung durchgeführt werden müssen.

Die Anforderungen eines Produkts hinsichtlich seiner Montagevorgänge lassen sich ebenso wie die Fähigkeiten der zur Montage erforderlichen Betriebsmittel über sogenannte Skills beschreiben. Diese Skills werden über individuelle Parameter weiter spezifiziert. Die Skills der Betriebsmittel können darüber hinaus kombiniert werden, um komplexere, zusammengesetzte Montagevorgänge zu erzeugen.

Durch die vorliegende Erfindung werden Rekonfigurationen und Umrüstungen von Montageanordnungen oder Montagelinien vermieden, was zu einer Zeit- und Kostenersparnis bei der Montage führt. Der Konstrukteur wird ebenfalls unterstützt, so dass Produktkosten eingespart werden können. Dem Kunden können neben Angeboten eines Produkts mit einkalkuliertem Rekonfigurationsaufwand der Montageanordnung auch günstige Produktionsangebote mit einem an die jeweilige Montageanordnung angepassten Produktdesign vorgelegt werden. Dadurch können dem Kunden kostengünstigere Angebote gemacht oder eine effizientere Nutzung der Produktionsanlage erzielt werden.

Im Folgenden wird die vorliegende Erfindung anhand erfindungsgemäßer Ausführungsformen mit Bezug zu den Figuren im Detail beschrieben.

In Fig. 1 ist schematisch ein Produkt dargestellt, welches mittels einer Montageanordnung montiert werden kann.

In Fig. 2 ist eine Montageanordnung zur Montage des in Fig. 1 dargestellten Produkts schematisch dargestellt.

In Fig. 3 ist ein Programmablaufdiagramm zum Bereitstellen einer Anweisung zur Montage des in Fig. 1 dargestellten Produkts dargestellt.

In Fig. 4 ist eine Vorrichtung zum Bereitstellen einer eine Montage des in Fig. 1 dargestellten Produkts betreffenden Anweisung schematisch dargestellt.

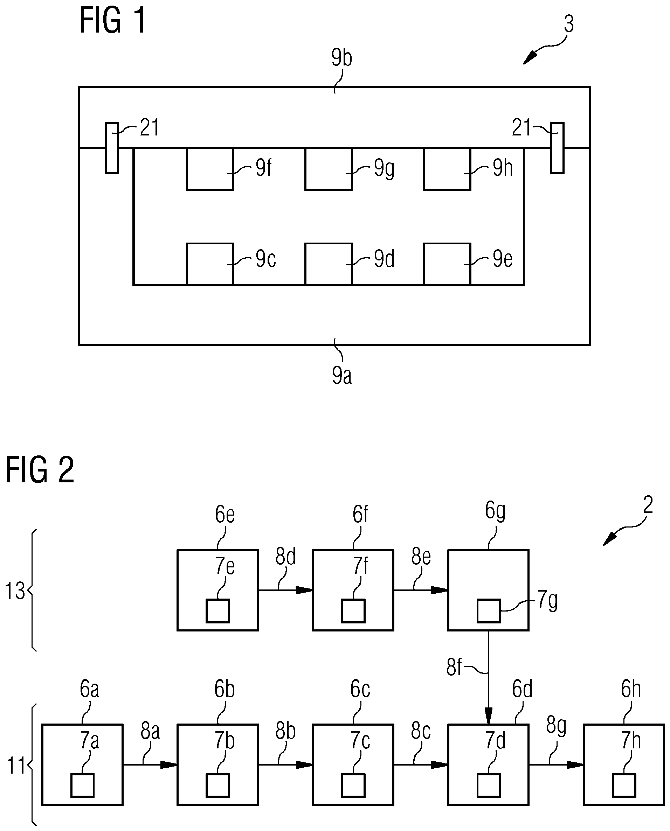

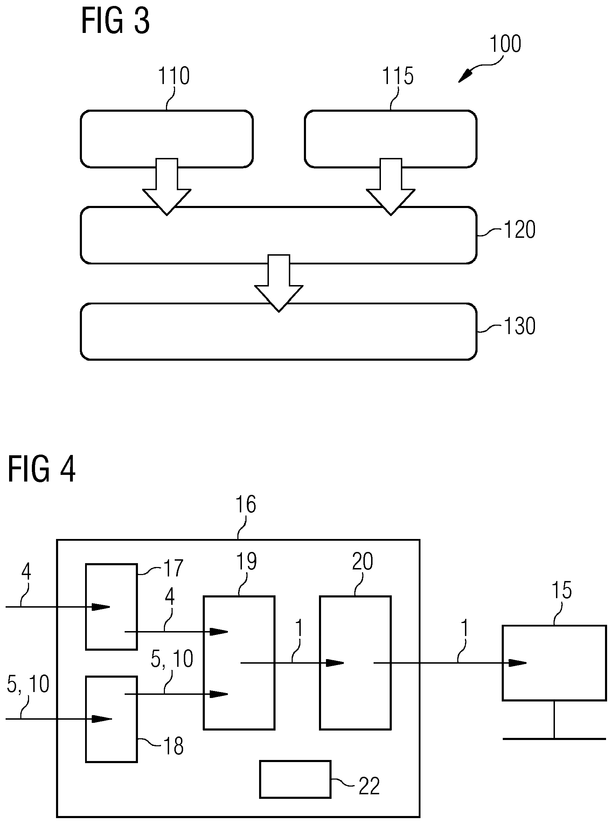

In Fig. 1 ist ein Produkt 3 schematisch dargestellt, welches mittels eines Montageablaufs erstellt werden kann, welcher durch eine Montageanordnung realisiert wird. Dabei basiert der Montageablauf oder die Montage des Produkts auf einer bereitgestellten Anweisung 1 (siehe Fig. 4).

Das zu montierende Produkt 3 besteht aus zahlreichen Bauteilen 9a-9h. Gemäß den Produktdaten 4 des Produkts 3 müssen die Bauteile 9c-9e an dem Bauteil 9a angebracht werden, während die Bauteile 9f-9h an dem Bauteil 9b anzubringen sind, bevor das Bauteil 9b mittels Befestigungsmitteln 21 an dem Bauteil 9a zu befestigen ist.

Diese Produktdaten oder Anforderungen des Produkts können sich beispielsweise dadurch ergeben, dass durch das Anbringen des Bauteils 9b an dem Bauteil 9a mittels der Befestigungsmittel 21 der Anbringungsbereich, in welchem die Bauteile 9c bis 9h an dem Bauteil 9a bzw. 9b angebracht sind, versiegelt wird und somit für weitere Montageschritte nicht mehr zugänglich ist.

In einem solchen Fall kann es erforderlich und/oder zielführend sein, dass im Rahmen einer Vormontage ein erstes Zwischenprodukt, welches die Bauteile 9a, 9c, 9d und 9e enthält, sowie ein zweites Zwischenprodukt, welches die Bauteile 9b, 9f, 9g und 9h enthält, erstellt werden. Erst nach der Vormontage der beiden Zwischenprodukte werden die beiden Zwischenprodukte mit den Befestigungsmitteln 21 verbunden. Dagegen kann die Reihenfolge, in denen die Bauteile 9a, 9c, 9d und 9e am ersten Zwischenprodukt und die Bauteile 9b, 9f, 9g und 9h am zweiten Zwischenprodukt befestigt werden, frei gewählt werden und stellen somit potentielle Designänderungen bei der Montage des Produkts dar, um die Produktdaten an die Montagedaten anzupassen.

In Fig. 2 ist die Montageanordnung 2 dargestellt, mit welcher das in Fig. 1 dargestellte Produkt 3 montiert wird. Die Montageanordnung 2 umfasst mehrere Montagestationen 6a-6h, welche jeweils ein Montagezubehör 7a-7h aufweisen. Die Montagestationen 6a-6d und 6h bilden eine Hauptlinie 11, mit welcher eine Endmontage des Produkts durchgeführt werden kann, während die Montagestationen 6e-6f eine Nebenlinie 13 bilden, mit welcher eine Vormontage des Produkts 3 durchgeführt werden kann.

Die Montagestationen 6a-6h können mit Beförderungsmitteln 8a-8g verbunden sein, mit welchen das Produkt oder Bauteile des Produkts befördert oder bewegt werden können. Das Montagezubehör 7a-7h und die Beförderungsmittel 8a-8g sind Betriebsmittel der Montageanordnung 2. Die Fähigkeiten dieser Betriebsmittel und damit der Montageanordnung 2 bilden die Montagedaten 5, während Informationen bezüglich des Vorliegens der Hauptlinie 11 und der Nebenlinie 13 Strukturdaten 10 bilden, welche allerdings auch Teil der Montagedaten sein können.

In Fig. 3 ist der Flussplan für ein Verfahren 100 zum Bereitstellen einer Anweisung 1, welche eine Montage des Produktes 3 (insbesondere eine Designänderung bezüglich des Produktes 3) betrifft, dargestellt.

Im Schritt 110 empfängt das Verfahren Produktdaten 4, welche Anforderungen des Produkts 3 bezüglich der Montage des Produkts 3 umfassen, während in Schritt 115 Montagedaten 5 empfangen werden, welche Fähigkeiten der Montageanordnung 2 zur Montage des Produktes 3 umfassen. Die Produktdaten 4 können ein dreidimensionales CAD-Modell des zu erstellenden Produkts 3 umfassen. Die Montagedaten 5 können Informationen bezüglich der Montagefähigkeit der einzelnen Montagestationen 6a-6h umfassen, wobei diese Montagefähigkeiten anhand von lösungsneutralen Skills beschrieben werden können. Darüber hinaus können die Montagedaten 5 Informationen bezüglich der Beförderungsmittel 8a-8g und die vorab beschriebenen Strukturdaten 10 umfassen.

Im Schritt 120 wird die Anweisung 1 abhängig von den Produktdaten 4 und den Montagedaten 5 ermittelt. Dabei betrifft die Anweisung insbesondere Informationen bezüglich einer Designänderung des Produktes 3, um die durch die Produktdaten 4 gekennzeichneten Randbedingungen oder Anforderungen des Produktes 3 an die durch die Montagedaten 5 gekennzeichneten Fähigkeiten der Montageanordnung 2 zur Montage des Produkts 3 anzupassen.

Im Schritt 130 wird die Anweisung 1 ausgegeben. Die Anweisung 1 umfasst dabei insbesondere eine oder mehrere Designänderungen des Produktes 3, welche dazu führen, dass das Produkt 3 ohne eine Änderung der Montagedaten 5 und damit der Montageanordnung 2 von der Montageanordnung 2 montiert werden kann. Das Ausgeben 130 der ermittelten Anweisung 1 erfolgt dabei mittels einer graphischen Visualisierungseinrichtung (z.B. eines Monitors).

Durch die Ausgabe der Anweisung 1 auf dem Monitor 15 kann ein Benutzer Anweisung 1 bewerten und anschließend verwerfen (oder ändern) oder freigeben, bevor die Anweisung 1 und die damit definierte Designänderung des Produkts 3 umgesetzt wird.

In Fig. 4 ist eine Vorrichtung 16 dargestellt, welche ausgestaltet ist, um eine Anweisung 1 zu ermitteln und auszugeben. Die Vorrichtung 16 umfasst eine erste Empfangseinrichtung 17, um die Produktdaten 4 zu empfangen, eine zweite Empfangseinrichtung 18, um die Montagedaten 5 zu empfangen, und eine Ermittlungseinrichtung 19, um abhängig von den Produktdaten 4 und den Montagedaten 5 die Anweisung 1 zu ermitteln. Schließlich umfasst die Vorrichtung 16 eine Ausgabeeinrichtung 20, mit welcher die ermittelte Anweisung 1 ausgegeben wird.

Als allgemeine Regel wäre es möglich, dass diese Ermittlung der Anweisung in einer Planungsphase geschieht, d.h. bevor die Produktion tatsächlich aufgenommen wird.

An der erfindungsgemäßen Vorrichtung 16 kann eine graphische Visualisierungseinrichtung 15 angeschlossen sein, um die Anweisung 1 auf dieser Einrichtung 15 auszugeben. Darüber hinaus existiert in der Vorrichtung ein Speicher 22, in den ein Programm geladen werden kann, welches mittels Prozessmitteln (nicht dargestellt) der Vorrichtung das erfindungsgemäße Verfahren ausführt.

### Bezugszeichenliste

- 1: Anweisung
- 2: Montageanordnung
- 3: Produkt
- 4: Produktdaten
- 5: Montagedaten
- 6a-6h: Montagestation
- 7a-7h: Montagezubehör
- 8a-8g: Beförderungsmittel
- 9a-9h: Bauteile
- 10: Strukturdaten
- 11: Hauptlinien
- 13: Nebenlinien
- 15: Graphische Visualisierungseinrichtung
- 16: Vorrichtung
- 17: Erste Empfangseinrichtung
- 18: Zweite Empfangseinrichtung
- 19: Ermittlungseinrichtung
- 20: Ausgabeeinrichtung
- 21: Befestigungsmittel
- 22: Speicher
- 100: Verfahren
- 110: Empfangen von Produktdaten
- 115: Empfangen von Montagedaten
- 120: Ermitteln der Anweisung
- 130: Ausgeben der Anweisung

## Patentansprüche

1. Verfahren (100) zum Bereitstellen einer Anweisung (1), welche eine Montage eines Produktes (3) betrifft,
wobei das Verfahren folgende Schritte umfasst:
Empfangen (110) von Produktdaten (4), welche für eine oder mehrere Randbedingungen der Montage des Produktes (3) kennzeichnend sind,
Empfangen (115) von Montagedaten (5), welche für eine Montageanordnung (2) zur Montage des Produkts (3) kennzeichnend sind,
Ermitteln (120) der Anweisung (1) abhängig von den Produktdaten (4) und den Montagedaten (5),
Ausgeben (130) der Anweisung (1).

2. Verfahren nach Anspruch 1,
**dadurch gekennzeichnet,**
**dass** die Montagedaten (5) Informationen umfassen, welche eine Fähigkeit zur Montage des Produktes (3) mittels Betriebsmitteln (7a-7h, 8a-8h) einer oder mehrerer Montagestationen (6a-6h) der Montageanordnung (2) definieren.

3. Verfahren nach Anspruch 2,
**dadurch gekennzeichnet,**
**dass** die Anweisung (1) Informationen bezüglich einer Designänderung des Produktes (3) betrifft, um die durch die Produktdaten (4) gekennzeichneten eine oder mehreren Randbedingungen an die durch die Montagedaten (5) gekennzeichnete Fähigkeit zur Montage des Produktes (3) anzupassen.

4. Verfahren nach einem der vorhergehenden Ansprüche,
**dadurch gekennzeichnet,**
**dass** das Ermitteln (120) der Anweisung (1) ein Abgleichen zwischen den Produktdaten (4) und den Montagedaten (5) umfasst, um dadurch einen durch die eine oder mehreren Randbedingungen spezifizierten und von der Montageanordnung (2) nicht durchführbaren Montagevorgang zu bestimmen.

5. Verfahren nach einem der vorhergehenden Ansprüche,
**dadurch gekennzeichnet,**
**dass** das Ermitteln (120) der Anweisung (1) eine Mehrkörpersimulation umfasst, mit welcher Bewegungen von Betriebsmitteln (7a-7h, 8a-8h) der Montageanordnung (2) zusammen mit Bauteilen (9a-9h, 21) des Produktes (3) bei der Montage des Produktes (3) in Abhängigkeit von der einen oder den mehreren Randbedingungen simuliert werden, um eine Kollisionsprüfung zu realisieren, um dadurch einen von der Montageanordnung (2) nicht durchführbaren Montagevorgang zu bestimmen.

6. Verfahren nach Anspruch 4 oder 5,
**dadurch gekennzeichnet,**
**dass** das Ermitteln (120) der Anweisung (1) ein Kategorisieren des nicht durchführbaren Montagevorgangs umfasst, um ein Fehlerbild zu bestimmen, welches einen Grund umfasst, weshalb der Montagevorgang nicht durchführbar ist.

7. Verfahren nach Anspruch 6,
**dadurch gekennzeichnet,**
**dass** das Ermitteln (120) der Anweisung (1) ein regelbasiertes Bestimmen einer Designänderung ausgehend von dem Fehlerbild umfasst, um dadurch die Produktdaten (4) an die Montagedaten (5) anzupassen.

8. Vorrichtung, welche zum Bereitstellen einer Anweisung (1) ausgestaltet ist, die eine Montage eines Produkts (3) betrifft,
wobei die Vorrichtung (16) umfasst:
eine erste Empfangseinrichtung (17), welche ausgestaltet ist,
um Produktdaten (4) zu empfangen, die für eine oder mehrere Randbedingungen der Montage des Produkts (3) kennzeichnend sind,
eine zweite Empfangseinrichtung (18), welche ausgestaltet ist, um Montagedaten (5) zu empfangen, die für eine Montageanordnung (2) zur Montage des Produkts (3) kennzeichnend sind,
eine Ermittlungseinrichtung (19), welche ausgestaltet ist, um abhängig von den Produktdaten (4) und den Montagedaten (5) die Anweisung (1) zu ermitteln, und
eine Ausgabeeinrichtung (20), welche ausgestaltet ist, um die Anweisung (1) auszugeben.

9. Vorrichtung nach Anspruch 8, welche zur Ausführung des Verfahrens nach einem der Ansprüche 1-7 ausgestaltet ist.

10. Computerprogrammprodukt, welches ein Programm umfasst und direkt in einen Speicher (22) einer programmierbaren Vorrichtung (16) ladbar ist, mit Programm-Mitteln, um alle Schritte des Verfahrens nach einem der Ansprüche 1-7 auszuführen, wenn das Programm in der Vorrichtung (16) ausgeführt wird.

11. Elektronisch lesbarer Datenträger mit darauf gespeicherten elektronisch lesbaren Steuerinformationen, welche derart ausgestaltet sind, dass sie bei Verwendung des Datenträgers in einer Vorrichtung (16) das Verfahren nach einem der Ansprüche 1-7 durchführen.
